# EUROPEAN PATENT APPLICATION

(11) **EP 1 100 030 A1**
(43) Date of publication of application: **16.05.2001**
(21) Application number: 00309020.6
(22) Date of filing: 13.10.2000
(51) Int. Cl.: G06F 17/60

(54) **Anonymous on-line trading and brokerage of physical products**

(30) Priority: 13.10.1999 US 159292 P
(71) Applicant: Altra Energy Technologies, Inc., Houston, Texas 77010 (US)
(72) Inventor: Braziel, Edward Russell, Houston, Texas 77010 (US)
(74) Representative: Evans, Huw David Duncan

(57) **Abstract**

A computerized trading system in which a broker can trade on behalf of a trader in an anonymous, on-line marketplace for physical products.

## Description

This invention relates to automated trading and brokerage of physical products and, more particularly, to computer implemented methods for anonymous trading and brokerage of physical products.

Sales and purchases of physical products have historically been primarily a phone/fax based activities. Such physical products are traded in brokered in many different industries, from paper to steel, from truck capacity to meat products, and from flowers to energy. Traders responsible for selling production, purchasing supplies, and physical delivery of such physical products typically communicate bid/ask prices by phone. Typically these transactions have been facilitated by phone-based Brokers, commissioned intermediaries that facilitate transactions between buyers and sellers, acting as agent not principal (i.e., Generally, brokers act as agents for traders, and do not take title or otherwise get involved in the delivery or payment aspects of the transaction.)

In these traditional markets, as transactions were consummated, confirmations were faxed, delivery was arranged, scheduling documentation was exchanged, and each trading partner used its own internal back-office systems to manage the transaction through settlement. The majority of physical products continue to be traded by this process today. However, such a complex transaction chain has proved to be an extremely inefficient process that results in high transaction costs, missed trading opportunities, and complex operating procedures.

The present invention is directed to overcoming or at least minimizing the limitations of the conventional processes for trading physical products.

According to one aspect of the present invention, a trading and brokerage system is provided that includes a host computer system, one or more primary counterparties coupled to the host computer system that are identified as traders and one or more agents coupled to the host computer system that are identified as brokers doing business for one or more traders.

According to another aspect of the present invention, a computer implemented method of trading and brokering products for traders and brokers of a computer system is provided that includes identifying one or more of the primary counterparties as traders, identifying one or more of the agents as brokers doing business on behalf of traders, and permitting the traders and broker users to purchase and sell physical products anonymously using the computer system, whereby physical products include both tangible products which are physically delivered and tangible products traded on the basis of published pricing indices or similar pricing mechanisms.

According to another aspect of the present invention, a computer program for a computerized trading and brokerage system in which trader and broker users purchase and sell physical products recorded in a medium in a machine readable format is provided that includes identifying one or more of the primary counterparties as traders, identifying one or more of the agents as brokers doing business on behalf of one or more traders, and permitting the trader and broker users to purchase and sell products anonymously using the trading and brokerage system.

According to another aspect of the present invention, a computer implemented method of providing an anonymous private negotiation between at least one potential buyer and at least one potential seller (or agents acting on behalf of buyers and/or sellers) in a computerized trading and brokerage system is provided that includes informing the other users of the system that a deal is in private negotiation and permitting the potential buyer and the potential seller to privately negotiate the deal anonymously.

According to another aspect of the present invention, a computer program for providing a anonymous private negotiation between at least one potential buyer and at least one potential seller (or agents on behalf of buyers and/or sellers) in a computerized trading and brokerage system recorded in a medium in a machine readable format is provided that includes informing the other users of the system that a deal is in private negotiation, and permitting the potential buyer and the potential seller to privately negotiate the deal.

According to another aspect of the present invention, a computer implemented method of placing trading limits on counterparties in a computerized trading and brokerage system is provided that includes permitting each of the users of the system to place limits on the counterparties to a transaction.

According to another aspect of the present invention, a computer program for placing limits on counterparties in a computerized trading and brokerage system recorded in a medium in a machine readable format is provided that includes permitting each of the users of the system to place limits on the counterparties to a transaction.

According to another aspect of the present invention, a computer implemented method of providing a trader in a computerized trading and brokerage system a visual indication of the market for the trader that includes providing a visual indication of the transactions that can be executed by the trader, providing a visual indication of the transactions that cannot be executed by the trader, and providing a visual indication of the offers and bids posted by the trader.

According to another aspect of the present invention, a computer program for providing a trader in a computerized trading and brokerage system a visual indication of the market for the trader recorded in a medium in a machine readable format is provided that includes providing a visual indication of the transactions that can be executed by the trader, providing a visual indication of the transactions that cannot be executed by the trader, and providing a visual indication of the offers and bids posted by the trader.

According to another aspect of the present invention, a computer implemented method of providing a trader in a computerized trading and brokerage system the ability to conduct transactions anonymously for either tangible products which are physically delivered, or tangible products traded on the basis of published pricing indices or similar pricing mechanisms.

According to another aspect of the present invention, a computer program for providing a trader in a computerized trading and brokerage system a visual indication of the market for the trader recorded in a medium in a machine readable format is provided that includes providing the ability to conduct transactions anonymously for either tangible products which are physically delivered, or tangible products traded on the basis of published pricing indices or similar pricing mechanisms.

According to another aspect of the present invention, a computer implemented method of trading by a broker in a computerized trading and brokerage system is provided that includes permitting the broker to trade anonymously on behalf of one or more principal traders.

According to another aspect of the present invention, a computer program for trading by a broker in a computerized trading and brokerage system recorded in a medium in a machine readable format is provided that includes permitting the broker to trade anonymously on behalf of one or more principal traders.

Embodiments of this invention will now be described by way of examples only and with reference to the accompanying drawings, in which:

Figure 1 is a schematic illustration of an embodiment of a computer implemented system for anonymous electronic trading and brokerage.

Figure 2 is a schematic illustration of the computer implemented system for anonymous electronic trading and brokerage of Figure 1 including one or more brokers doing business as traders.

Figure 3a is a flow chart illustration of an embodiment of the operation of the system of Figure 1.

Figure 3b is a flow chart illustration of an embodiment of the operation of the system of Figure 1.

Figure 4a is a flow chart illustration of an embodiment of the initiation of a trade.

Figure 4b is a flow chart illustration of an embodiment of the initiation of a trade.

Figure 5 is a flow chart illustration of an embodiment of a completion of a trade.

Figure 6a is a flow chart illustration of an embodiment of a private negotiation.

Figure 6b is a flow chart illustration of an embodiment of a private negotiation.

Figure 7 is a flow chart illustration of an embodiment of placing limits on credit.

Figure 8 is a flow chart illustration of an embodiment of placing limits on counter-parties.

Figure 9 is an illustration of an embodiment of a colour coded screen display.

A computer implemented system for automated, anonymous trading and brokerage is provided. In a preferred embodiment, the system is used to sell and purchase energy products such as, for example, oil, gas, and electrical energy to and from utilities. More generally, the present system may be used to buy, sell and trade any number of products.

Electronic trading and brokerage of energy provides access to a much larger trading universe than a few telephone calls that are made by the phone-based trader. Using the present anonymous electronic trading and brokerage system, traders gain instant access to thousands of available transactions, providing real-time price discovery across a large number of markets. Traders can better visualize pricing trends, accurately measure the bid/ask spread, and evaluate unique regional developments. Also, traders have immediate access to the "eyeballs" of hundreds of other traders. Whether posting a new deal that will be instantly broadcast to every trading and brokerage station on the network or consummating deals posted by other companies, a specific trader gains instantaneous, anonymous, and unbiased access to the entire energy market.

The present system further provides an anonymous, electronic transaction platform which matches buyers and sellers of energy products in an on-line marketplace. The present system provides energy traders the ability to buy and sell natural gas, electric power, natural gas liquids (propane, butane, and other liquid fuels), and crude oil over the Internet, anonymously, in real-time. Buyer and seller are matched when they agree to a price for an energy package, defined by common specifications, such as product type, quantity, timing, and location. The benefits to users of the system include price transparency, increased market liquidity, reduced transaction costs, reduced credit risk, and anonymity.

The present system is further designed to meet the unique requirements of each energy product marketplace. Although the basic functionality is very similar across the liquid fuels, natural gas, and electric power markets, there are a number of key differences, both in screen formats and in the way transactions are handled. These differences, particularly those involved with post-transaction processing, have an impact on the risk and revenue profile of an electronic trading and brokerage business.

In one embodiment, transactions using the present system utilize what is known as the "trader match" or "name-give-up" model and is loosely patterned after phone-based broker practices: users specify their approved trading partners in advance of any trading and brokerage activity. The preferred trading and brokerage process preferably works as follows:

The present system anonymously matches a trade when buyer and seller have agreed to a price for an energy package (product type, quantity, timing, location).

Upon consummation of the match, if the parties previously approved transactions with each other, the buyer and seller are only then revealed to each other and handle the details of delivery and payment between themselves.

All risk of the transaction from a performance and credit perspective are preferably borne by the buyer and seller.

If a buyer and seller are matched and one or both have not authorized trading with the other party, the trade is blocked by the present system; the parties are not revealed to each other; and the trade is not consummated.

In an alternative embodiment, the present system utilizes a different model known as the "delivered" or "market match" model. In this model, there is no requirement to pre-authorize counter parties. The host stands between buyer and seller, insuring compliance with payment and performance of the transaction, and providing complete anonymity through the entire transaction process. The host backs its delivery role through a number of risk mitigation procedures, including strict credit management systems/policies, contractual provisions, securitisation, and insurance:

Matching of buyer and seller occurs similarly to the business rules described for the "name-give-up" model.

However, after the transaction is consummated, the parties are not revealed to each other. At the time of delivery of the energy product, the seller schedules delivery to the host as counterparty to the trade.

In turn, the host instantaneously redelivers the energy product to the buyer.

Subsequently, the buyer pays the host, the host takes its commission and pays the balance to the seller.

As noted above, phone-based Brokers are commissioned intermediaries that facilitate transactions between buyers and sellers, acting as agent not principal (i.e., Brokers do not take title or otherwise get involved in the delivery or payment aspects of the transaction.) They match buyers and sellers by continuously calling market participants, discovering prices, and facilitating transactions. There are a number of phone-based Brokers active in the energy market, each acting as an independent brokerage entity.

Several embodiments of the present system exist in parallel with these phone based brokers, providing access to bids and offers for the same energy products. However, there historically has been no way for phone-based orders to converge with electronic orders, resulting in a fragmented market. For example, prices displayed on several embodiments of the present system are limited to transactions which have been bid or offered on the system. Phone based brokers are generally unaware of pricing provided on several embodiments of the present system. In this fragmented market, price discovery is split between electronic and voice-based media, resulting in market inefficiencies, missed opportunities, and unnecessary price volatility. An alternative embodiment of the present system resolves these problems.

A preferred embodiment of the present system enables phone-based voice brokers to participate as anonymous agents on the present system alongside principal traders. What makes this system unique is that a principal trader can now choose to post and lift deals directly on the screen or authorize one or more voice brokers to act on his behalf. This new type of broker-assisted trading service is called "Doing-Business-As" or "DBA." A broker with DBA authorization from his client can continue to do traditional voice brokerage with other brokers in his brokerage house; however, DBA functionality enables this broker to transact not only with other principal traders who have posted deals directly on the system screen, but also with brokers from other houses who have been granted DBA authority by other traders.

The DBA system preferably (1) maintains complete anonymity throughout the trading and brokerage process while (2) enables other characteristics necessary for efficient trading and brokerage, such as deal-specific negotiation between parties and the management of credit between counter parties to a transaction.

The DBA functionality enables phone-based voice brokers to participate as agents on the trading and brokerage system alongside principal traders. In the DBA system, a principal trader can now choose to post and lift deals directly on the screen or authorize one or more voice brokers to act on his behalf. This new type of broker-assisted trading service is called "Doing-Business-As" or "DBA." A broker with DBA authorization from his client can continue to do traditional voice brokerage with other brokers in his brokerage house; however, DBA functionality enables this broker to transact not only with other principal traders who have posted deals directly on the system, but also with brokers from other houses who have been granted DBA authority by other traders.

Traders always prefer more information to less, however they are reluctant to participate in a marketplace where the open exchange of information could be used by others to their disadvantage. Traditional phone brokers develop relationships of trust with their clients by maintaining their anonymity while helping them get deals done. However, because a trader only sees the deals offered by his broker's other clients, he is giving up a significant amount of market knowledge to preserve anonymity. And, there is always the threat that an unscrupulous broker will favour one client over another and reveal information for the benefit of that client over all others.

The DBA system enables the energy buyer or seller to (1) see the entire market while (2) maintaining complete anonymity and (3) benefiting from the market knowledge of his/her selected voice broker. This is a accomplished through a system of managing, facilitating and presenting transaction orders which are entered and viewed by market participants.

The DBA system is a revolutionary trading and brokerage system that marries the traditional analog market with the new digital marketplace. It is a totally unique technology, which can be applied not only to energy, but to any number of vertical markets from steel to paper; from produce to chemicals. In any market where wholesale buyers and sellers deal with broker intermediaries, DBA can facilitate the transition from inefficient phone-based deals, to efficient anonymous electronic transactions.

DBA functionality enables brokers to post, hit and lift prices anonymously, on behalf of voice customers. The Broker functions as agent, in the role of introducing buyer to seller. Either the buyer or seller can be acting through the system, as a User of the system.

Orders (bids and offers) remain anonymous whether the order is entered by a principal (User) or agent (Broker) . When viewing orders on the system, a market participant cannot determine the name of the other participants. Furthermore, a market participant cannot determine whether an order has been entered by a User or a Broker.

A User preferably controls counterparty risk through a master account, which covers all trading activity, whether conducted directly by the User on the system, or through a broker acting on behalf of the user. Users have the ability to limit counter parties (Users can specify who they are willing to do business with); and can establish credit limits for their acceptable counter parties (on both buy and sell side)

Bids and offers, whether entered by Users or by Brokers on behalf of Users are displayed to all system users simultaneously); both Users and Brokers have see the best bid and best offer available in the marketplace, irrespective of whether the bid/offer is electronic or voice.

All administrative functions for voice-based and electronic transactions are preferably centralized. Transaction confirmations and invoices for all trading and brokerage activity are prepared and issued by the system. The DBA system further provides this activity to occur without compromising competitive information between voice Brokers participating on the system.

DBA provides the option of a private negotiation between Users or Brokers acting on behalf of Users ('off-screen negotiation'); For example, in most electronic markets, if the market is bid $20 at $21 (the best offer to sell is at $21, while the best offer to buy is at $20), if the seller wants to 'split the difference', she would replace the $21 offer to sell with a $20.50 offer to sell, and this transaction would be displayed to the entire marketplace. With Off-screen negotiation, the seller can offer to negotiate anonymously, on-line and hidden from other market participants. The transaction is flagged to other market participants as 'IN NEGOTIATION'. But only the User and/or Broker involved in the transaction actually see the price interaction. After the transaction is consummated, the resulting price is displayed to all market participants.

The DBA system further preferably uses color to differentiate the status (known as state) of each order (order state). To all market participants (Users and Brokers) any transactable deal is listed in black; deals that a trader cannot do because of credit/counterparty concerns (see below) appear in red; deals the trader (and other traders in his own company) has posted appear in blue. The colours identified above are default system selections. User or broker has the ability to select other color schemes which differentiate the various order states. For a broker to be effective in a DBA mode, she preferably must see the same market screen that her User sees. This means that any deals her User can do must appear in black, and any deal her User cannot do must be in red. However, in addition to giving the broker deals to post on the screen, a trader may have given different deals to another broker or may have posted other deals herself. It is critical that a broker not be able to know this when she switches into DBA mode, because that would reveal more information to the broker than would be acceptable. Therefore, some of the deals that a trader sees in blue must appear red to the broker (deals posted by the trader himself or posted by other brokers DBA for this trader), while only those deals given to the broker by the trader will appear in blue. It is the DBA color-coding and presentation process that maintains a trader's complete anonymity yet still allows all market participants (both traders and brokers) to see all available (but not necessarily transactable) numbers in the marketplace. This creates the most efficient and fair price-setting mechanism possible.

When a deal gets done on the system, each trader preferably receives an instantaneous, on-line confirmation notice that details the size, location, price and delivery terms of the trade and may reveal the identity of the counter parties to each other (in the name-give-up platform) . The rest of the market, however, only receives a notice that a deal was done at a certain price - the parties to the transaction are only known by the parties themselves. This provides an efficient, real-time communication of changes in market price to the market as a whole without compromising the trading and brokerage strategy of a specific market participant.

As noted above, the DBA system is applicable not only to energy, but to all electronic markets.

As electronic markets begin to permeate the economy, DBA can facilitate the transition from voice to electronic market making, and provide a centralized platform for increasing price transparency and reducing transaction cost.

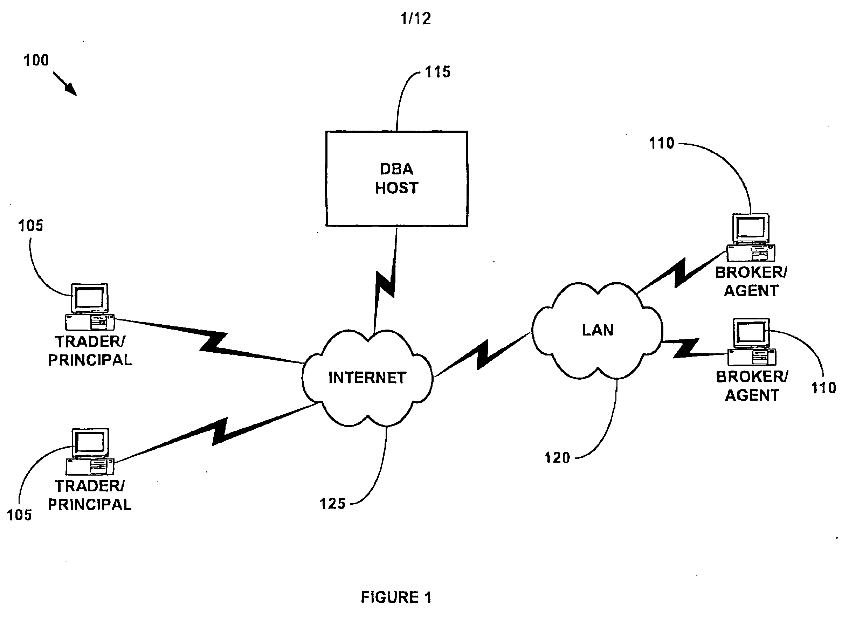

Referring initially to Figure 1, a preferred embodiment of a system 100 for providing trading and brokerage of products includes one or more trader/principals 105, one or more broker/agents 110, a host computer system 115, a local area network 120, and wide area network 125. The products may, for example, be paper, steel, food products, chemicals, natural gas, crude oil, propane, or other products. More generally, the system 100 is used to permit users to buy and sell all manner of products and services.

The trader/principals 105 are preferably users that buy and/or sell products. The trader/principals 105 are preferably operably coupled to the wide area network 125. Alternatively, the trader/principals 105 may be operably coupled to the host 110 or the local area network 120. The trader/principals 105 preferably include personal computers or work stations adapted to communicate with the wide area network 125. The trader/principals 105 preferably includes user interfaces. Alternatively, the trader/principals 105 may be automated users that implement a programmed decision making intelligence using, for example, an expert system.

The broker/agents 110 are users that are authorized to buy and/or sell products on behalf of the trader/principals 105. The broker/agents 110 are preferably operably coupled to the local area network 120. Alternatively, the broker/agents 110 may be operably coupled to the host 110 or the wide area network 125. The broker/agents 110 preferably include personal computers or work stations adapted to communicate with the local area network 125. The broker/agents 110 preferably includes user interfaces. Alternatively, the broker/agents 110 may be automated users that implement a programmed decision making intelligence using, for example, an expert system.

The host computer system 115 is adapted to enable the trader/principals 105 and the broker/agents 110 to trade products.

The local area network 120 is preferably operably coupled to the broker/agents 110 and the wide area network 125. The local area network 120 may be any number of conventional commercially available networks. In a preferred embodiment, the local area network 120 includes one or more wireless and/or cellular communication links.

The wide area network 125 is preferably operably coupled to the trader/principals 105, the host 110, and the local area network 120. The wide area network 125 may be any number of conventional networks. In a preferred embodiment, the wide area network 125 is the Internet. In a preferred embodiment, the wide area network 125 includes one or more wireless and/or cellular communication links.

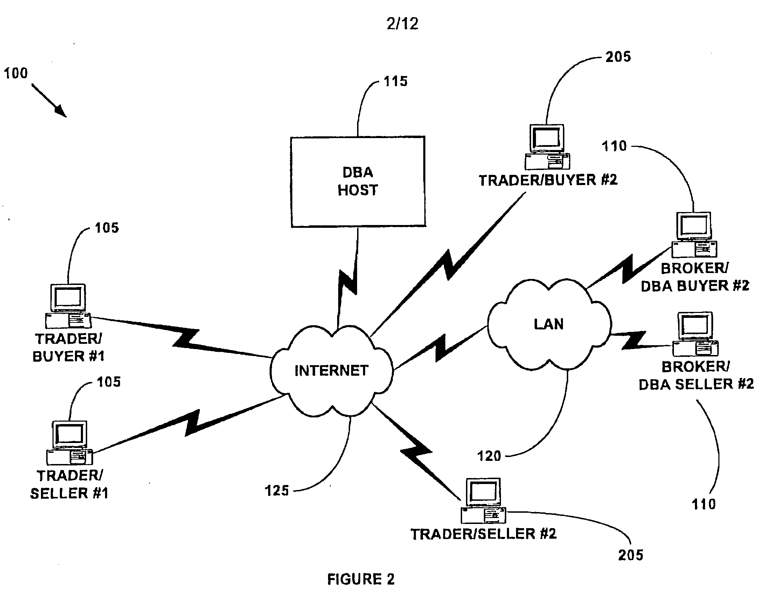

In a preferred embodiment, as illustrated in Figure 2, during the operation of the system 100, one or more of the broker/agents 110 do business as (DBA) a principal/trader. In this manner, the system 100 permits trader/principals 105 to trade directly for themselves, as well as through the use of a DBA broker/agent 110. Furthermore, the DBA broker/agents 110 may also act on behalf of other trader/principals. In addition, the principal/traders 205 that the broker/agents 110 are authorized to do business as (DBA) can also simultaneously trade in the system 100. In this manner, the principal/traders 205 can trade in the same transactions that the broker/agents 110 are authorized to act on behalf of the principal/traders 205, as well as other transactions. This provides an added level of flexibility to the system 100.

In several alternative embodiments, the system 100 is used to implement a trading and/or auctioning system substantially as described in one or more of the following U.S. Patents: 5,664,115, 5,715,314, 5,715,402, 5,717,989, 5,724,424, 5,748,731, 5,787,402, 5,794,210, 5,794,219, 5,802,502, 5,806,048, 5,809,483, 5,812,670, 5,812,776, 5,806,050, 5,835,896, 5,845,265, 5,845,266, 5,826,244, 5,873,071, 5,897,620, 5,905,974, 5,905,975, 5,862,325, 5,915,209, 5,918,218, 5,918,219, 5,911,137, 5,924,082, 5,924,083, 5,926,801, and 5,923,842, and in one or more of the following published PCT patent applications: WO 97/45802, WO 98/21667, WO 99/19821, WO 97/22072, WO 97/22074, WO 99/24921, and WO 99/26173, the disclosures of which are incorporated herein by reference. In this manner, the computer implemented trading and brokerage and/or auctioning of items such as, for example, products, is optimally facilitated through the use of agent/brokers DBA principal/traders.

Alternatively, the system 100 is used to implement any one of the trading systems commercially available from Altra Energy Technologies, Inc.

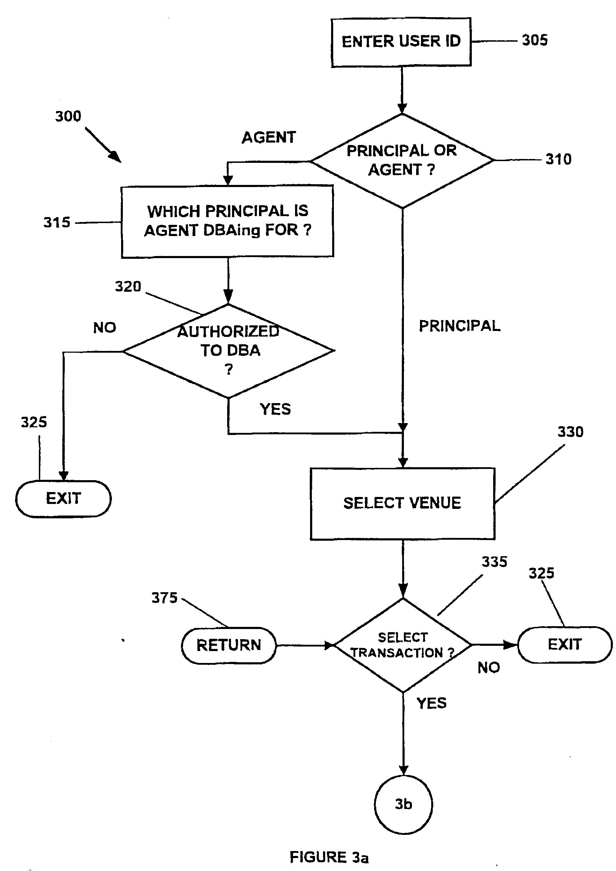

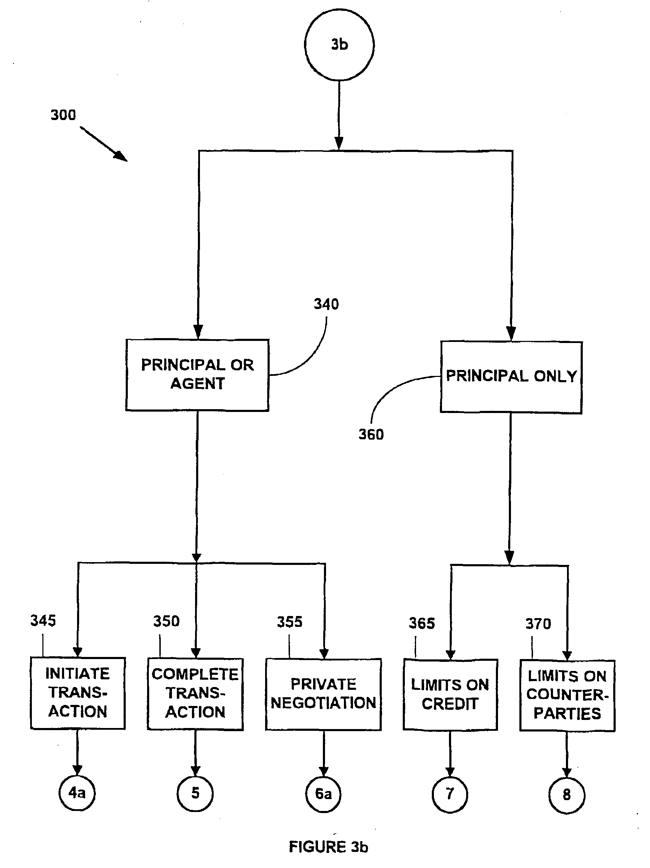

In a preferred embodiment, as illustrated in Figs. 3-9, during operation of the system 100, the host 115 implements an operating system 300 that includes the steps of: (1) entering the user identification in step 305; (2) determining whether the user is a principal/trader or a broker/agent in step 310; determining which principal, or principals, that the broker is doing business as in step 315; (3) determining whether the broker/agent is authorized to DBA a principal/trader in step 320; (4) exiting in step 325; (5) selecting a venue in step 330; (6) selecting a transaction in step 335; (6) permitting the use to select a first group of transactions if the user is a principal or agent in step 340; (7) initiating a transaction in step 345; (8) completing a transaction in step 350; (9) privately negotiating a transaction in step 355; (10) permitting the user to select from a second group of transactions if the user is a principal in step 360; (11) placing limits on credit worthiness in step 365; and placing limits on the counter-parties in step 370. The operating system 300 is preferably implemented as a computer program that is run and managed by the host1115. Alternatively, the operating system 300 may be distributed between and among the trader/principals 105 and 205, and/or the broker/agents 110, and/or the host 115, and/or the local area network 120, and/or the wide area network 125. In this manner, the operating system 300 may be implemented by all, or a portion, of the system 100. In a preferred embodiment, except as specifically disclosed below, the identity of the users, including their function as a principal/trader or agent/broker, are maintained in secrecy from all of the other users. In this manner, the users of the system 100 are able to interact in anonymity.

In a preferred embodiment, in step 305, the system 100 requests the users to enter their unique user identification label and password. In a preferred embodiment, the users preregister with the host 115 and provide their user identification label, password, name, address, trading category (broker/agent or principal/trader), credit history information, and, if applicable, their DBA authorization(s) and the identities of the principal/traders that have given them DBA authorization. The user information is preferably stored within the host 115. Alternatively, the user information is distributed between and among the trader/principals 105 and 205, and/or the broker/agents 110, and/or the host 115, and/or the local area network 120, and/or the wide area network 125. In this manner, the operating system 300 may be implemented by all or a portion of the system 100. In a preferred embodiment, all of the information associated with a particular user is maintained in a master account file assigned to the user.

In a preferred embodiment, in step 310, the system 100 determines if the user is a principal/trader or an agent/broker. If the user is a principal/trader, then the system 100 proceeds to step 330. If the user is an agent/broker, then the system 100 proceeds to step 315.

In a preferred embodiment, in step 315, the agent/broker selects which trader/principal(s) that the agent/broker will be doing business as. In a preferred embodiment, the agent/broker is limited to doing business as a single trader/principal. Alternatively, the agent/broker is limited to doing business on behalf of a plurality of trader/principals provided that the transactions do not overlap.

In a preferred embodiment, in step 320, the system 100 determines if the agent/broker is authorized to DBA a trader/principal. If the agent/broker is not authorized to DBA a trader/principal, then the system 100 exits in step 325. If the agent/broker is authorized to DBA a trader/principal, then the system proceeds to step 330. In a preferred embodiment, each agent/broker has DBA authorization from a plurality of trader/principals. In this manner, the operation of the system 100 is extremely flexible. In an alternative embodiment, each trader/principal has DBA authorization from one or more trader/principals to DBA in a plurality of non-overlapping transactions.

In a preferred embodiment, in step 330, the user selects the venue in which the user will be trading. In a preferred embodiment, the venue includes one or more of the following: the product, the location, the delivery timing, and the volume of the product. In this manner, the system 100 can specifically direct the user to transactions with users having similar venue parameters.

In a preferred embodiment, in step 335, the user selects a transaction from among the following choices: initiating a transaction in step 345; completing a transaction in step 350, conducting a private transaction negotiation in step 355, placing limits on the credit worthiness of counter-parties in step 365, and placing limits on the identities of counter-parties in step 370.

In a preferred embodiment, the system 100 permits principals or agents to select transactions 345, 350 and 355. In a preferred embodiment, the system 100 limits access to transactions 365 and 370 to principals only.
The user then conducts the selected transaction. Once the user has completed the selected transaction, the system returns in step 375, and the user is then able to select another transaction in step 335 or the user may exit the system 100 in step 325.

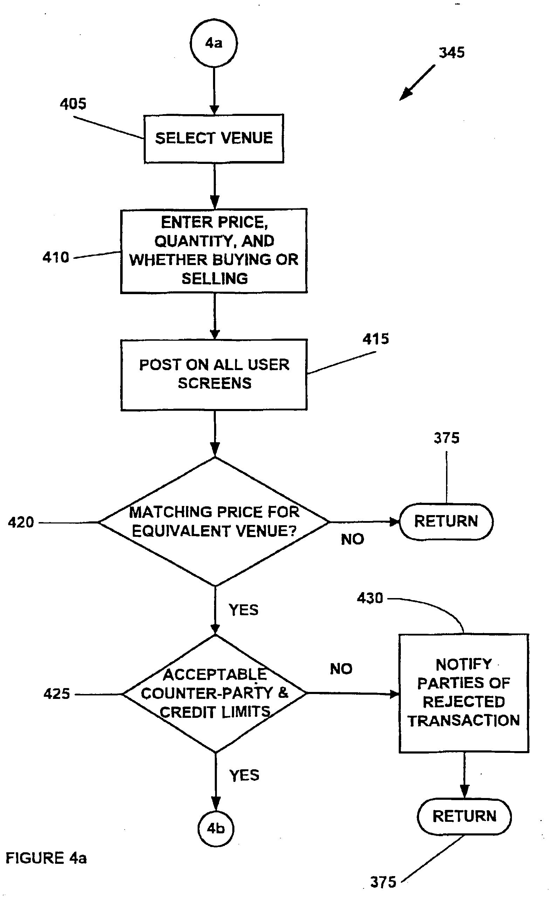

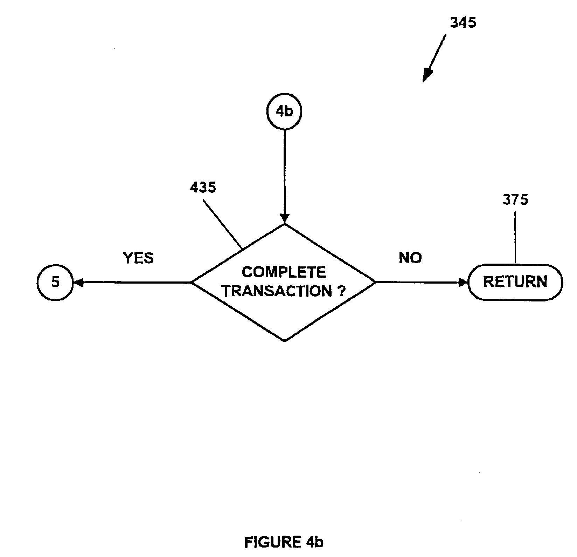

In a preferred embodiment, as illustrated in Figs. 4a and 4b, the transaction initiation step 345 includes the steps of: (1) selecting the venue in step 405; (2) entering a price, a quantity, and whether the user is buying or selling in step 410; (3) posting the price, quantity, and selected transaction to all users in step 415; (4) determining if a matching or better price for an equivalent venue exists in step 420; (5) determining if the counterparty with a matching or better price is acceptable and also has acceptable credit worthiness in step 425; (6) if the matching party or credit limits are unacceptable, then notifying the parties to the transaction of the rejected transaction in step 430; (7) determining whether or not to complete the transaction in step 435.

In a preferred embodiment, in step 405, the user is request by the system 100 to enter the desired venue for the transaction. In a preferred embodiment, the venue includes one or more of the following: the product, the location, the delivery timing, and the product volume.

In a preferred embodiment, in step 410, the user is requested by the system 100 to enter a price, a quantity, and whether the user is buying or selling. In a preferred embodiment, the user is also requested by the system 100 to enter the identity of the products, the delivery date, and other terms of the transaction. Once the user completes the entry of the price and quantity in step 410, the offer or bid is preferably simultaneously displayed to all of the on-line users of the system 100 in step 415.

In a preferred embodiment, in step 420, the system 100 searches for bids or offers having the same, or better, price and identifies these for the user. In this manner, the system 100 facilitates the completion of transactions. Alternatively, the user manually scans the posted bids and offers to locate acceptable transactions. If no acceptable bids or offers have been posted by other users, then the system preferably returns in step 375. In a preferred embodiment, the selection of acceptable transactions is facilitated by the user also providing a tolerance or range of acceptable transaction parameters. In this manner, the user can then enter into a private negotiation in order to further refine the terms of a deal.

In a preferred embodiment, in step 425, the system 100 determines which counterparty users are acceptable based upon criteria entered by the user posting the bid or offer. In this manner, the trading of products is optimally enhanced and efficient. In a preferred embodiment, the system 100 prevents transactions between the user and unacceptable counter parties. If the counterparty is acceptable, then the system 100 preferably proceeds to step 435. If the counterparty is not acceptable, then the system 100 notifies the parties of the rejected transaction in step 430 and returns in step 375. In a preferred embodiment, the system 100 permits the user to provide a tolerance or range of acceptable criteria. In this manner, the user is provided with more flexibility in consummating a deal.

In a preferred embodiment, the system 100 further informs the user of unacceptable counter parties by graphically displaying indicia with bids or offers posted by unacceptable counter parties. In a preferred embodiment, the graphical indicia includes displays bids or offers posted by unacceptable counter parties using a user defined colour coded display that includes a colour #1 for transactions that can be done, a colour #2 for transactions that cannot be done, and a colour #3 for bids or offers posted by the user. In this manner, the user is provided with an easy to follow graphical display that quickly and efficiently informs the user of his or her options for trading.

In a preferred embodiment, in step 435, the user is requested to select which acceptable transactions to execute. If the user decides to execute an acceptable transaction, then the system 100 preferably proceeds to step 350. If the user declines to execute an acceptable transaction, then the system 100 preferably returns in step 375.

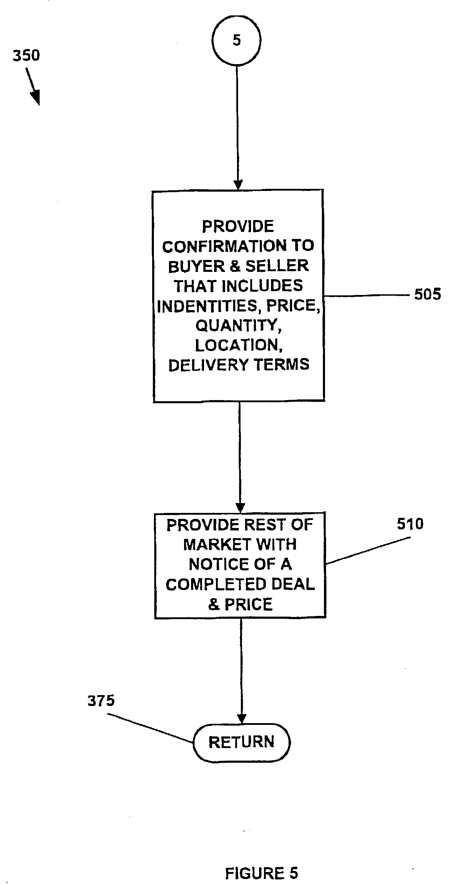

In a preferred embodiment, as illustrated in Figure 5, the transaction completion step 350 includes the steps of: (1) providing a confirmation to the buyer and seller that includes identities, price, quantity, location and delivery terms in step 505; and (2) providing the rest of the online users with a notice of the completion of a trade and the price in step 510.

In a preferred embodiment, in step 505, the system provides the buyer and seller with a confirmation of the transaction that includes the identities of the buyer and seller, the price, the quantity, the location and the delivery terms. In a preferred embodiment, this confirmation is only provided to the buyer and seller. In this manner, the maximum amount of anonymity is maintained. In an alternative embodiment, the identities of the buyer and seller remain anonymous to the buyer and seller, and the host 115 acts as an intermediary.

In a preferred embodiment, in step 510, the system 100 provides all of the other online users with notice of the completion of a transaction and the price. In a preferred embodiment, no other information is provided to the online users of the system 100. In this manner, the maximum amount of anonymity is maintained. The system 100 then preferably returns in step 375.

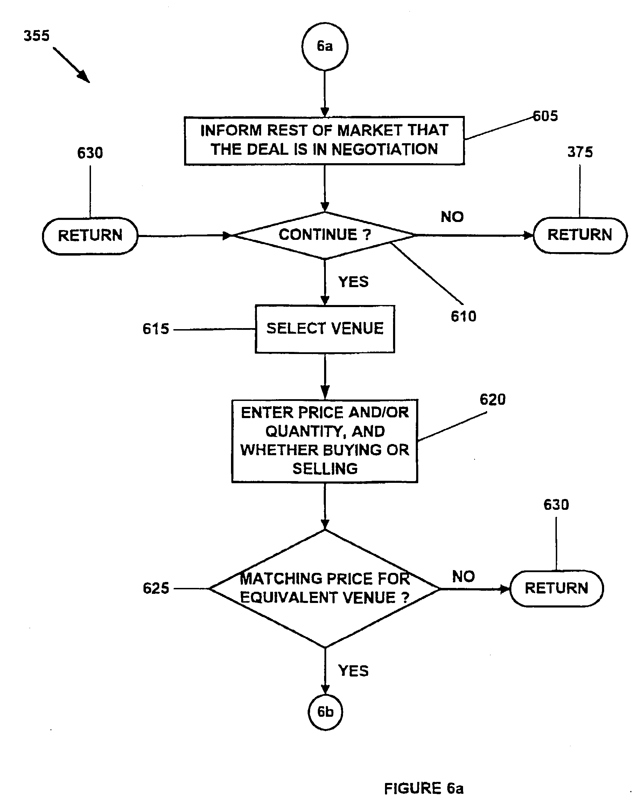

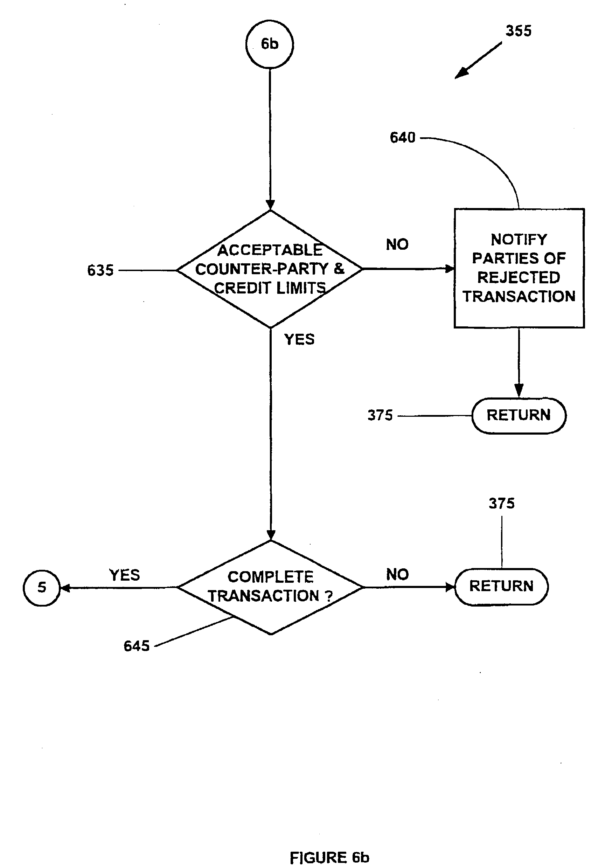

In a preferred embodiment, as illustrated in Figs. 6a and 6b, the private negotiation step 355 includes the steps of: (1) informing the rest of the online users in the market that the transaction is being privately negotiated in step 605; (2) determining if the potential buyer and/or seller wish to continue the private negotiation in step 610; (3) requesting the users to enter the desired venue in step 615; (4) requesting the users to enter the price and/or quantity in step 620; (5) determining if the current prices match for an equivalent venue in step 625; (6) determining if the counterparty with the matching price is acceptable and also has acceptable credit worthiness in step 635; (7) if the counterparty is not acceptable, then notifying the users of a rejected transaction in step 640; and (8) determining whether or not to complete the transaction in step 645. The private negotiation step 355 preferably follows an initial posting of a bid and offer by a buyer and a seller. In this manner, an initial bid and offer that is not acceptable to the buyer and seller can be privately negotiated by the buyer and seller in order to consummate a deal.

In a preferred embodiment, in step 605, the system 100 informs the rest of the online users in the market that the transaction is in private negotiation. In a preferred embodiment, the system 100 informs the rest of the online users in the market that the transaction is in private negotiation by providing a graphical indicia for the corresponding offer and bid involved in the private negotiation. In this manner, the rest of the market is informed that a transaction is being negotiated privately. The ability to privately negotiate a deal provides a tremendous amount of flexibility to the system 100.

In a preferred embodiment, in step 610, the potential buyer and seller are requested by the system 100 to choose whether or not to continue the private negotiation. If the potential buyer or seller choose to end the private negotiation, then the system 100 returns in step 355.

In a preferred embodiment, in step 615, the system 100 requests the users to enter the desired venue for the transaction. In a preferred embodiment, the venue includes one or more of the following: the product, the location, the terms of delivery, and the product volume. In this manner, the parties to the private negotiation may also negotiate the terms of the venue.

In a preferred embodiment, in step 620, the potential buyer and seller are requested by the system 100 to enter and/or alter their offers and bids, including at least a price and/or a quantity. In a preferred embodiment, the potential buyer and seller are also requested by the system 100 to enter and/or alter the identity of the products, the delivery date, and other terms of the transaction. In this manner, the potential buyer and seller can adjust their offer and bid in order to arrive at a completed trade.

In a preferred embodiment, in step 625, the system 100 determines if the present bid and offer have the same price for an equivalent venue. In this manner, the system 100 facilitates the completion of transactions. If the bid and offer prices match for an equivalent venue, then the system 100 preferably proceeds to step 635. If the bid and offer prices do not match for an equivalent venue, then the system 100 preferably returns in step 630. In this manner, the private negotiation process between the users continues. In a preferred embodiment, the determination of an equivalent venue includes the users providing a tolerance or range of acceptable venues. In this manner, the system 100 can further facilitate the consummation of transactions. In a preferred embodiment, the system 100 further includes an expert system that, using default parameters, selects venues that are approximately equivalent and then queries the users for further refinement of the tolerance or range of acceptable equivalent venues.

In a preferred embodiment, in step 635, the system 100 determines whether the counterparty is acceptable based upon criteria entered by the user posting the bid or offer. In this manner, the trading of products is optimally enhanced and efficient. In a preferred embodiment, the system 100 prevents transactions between the user and an unacceptable counterparty. If the counterparty is acceptable, then the system 100 proceeds to step 645. If the counterparty is not acceptable, then the system 100 notifies the parties to the private negotiation of the rejected transaction in step 640 and returns in step 375. In a preferred embodiment, the system 100 utilizes a tolerance or range of acceptable criteria provided by the user. In this manner, the user is provided with increased opportunities for the consummation of a transaction.

In an alternative embodiment, the system 100 determines whether the potential buyer and seller are compatible, based on credit worthiness and/or identity, upon the initiation of the private negotiation. If the potential buyer and seller are compatible, then the private negotiation continues. If the potential buyer and seller are not compatible, then the system 100 returns in step 355. In this manner, the trading and brokerage of products is optimized.

In a preferred embodiment, in step 645, the potential buyer and seller are requested to select whether or not to execute the transaction. If the potential buyer and seller decide to execute the transaction, then the system 100 preferably proceeds to step 350. If the potential buyer or seller decline to execute the transaction, then the system 100 preferably returns in step 375.

In an alternative embodiment, in step 355, the system 100 permits a plurality of potential buyers and sellers to privately negotiate a plurality of transactions. In this manner, the trading of products is accelerated.

In an alternative embodiment, all or at least a portion of step 355 is implemented using an electronic whiteboard in which the potential buyer and seller interact. In this manner, additional transaction parameters can be considered on-line by the potential parties to the transaction.

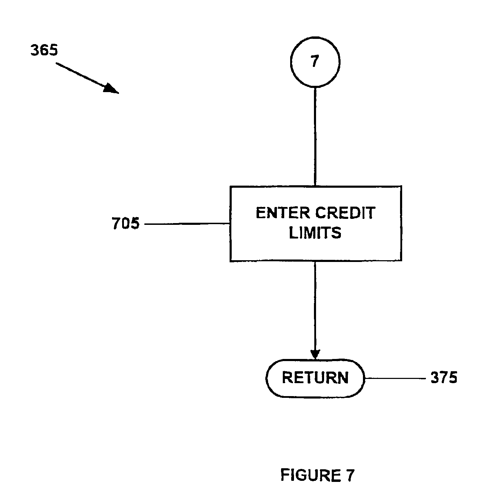

In a preferred embodiment, as illustrated in Figure 7, in step 365, the system 100 requests the user to enter credit limits for potential counter parties. In a preferred embodiment, the system 100 automatically selects at least some of the credit limit criteria based upon a global requirement placed on all online users in the market. In a preferred embodiment, the selection of step 365 is limited to users that are principals.

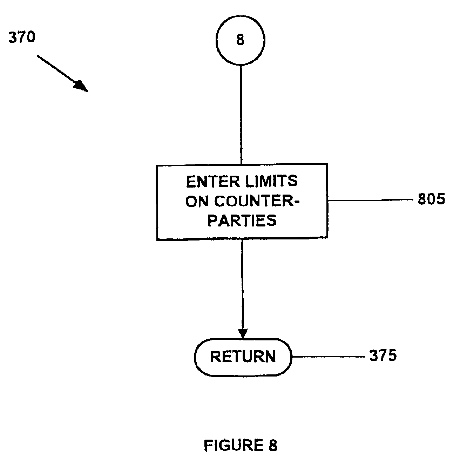

In a preferred embodiment, as illustrated in Figure 8, in step 370, the system 100 requests the user to enter limits on the identities of potential counter parties. In a preferred embodiment, the selection of step 370 is limited to users that are principals.

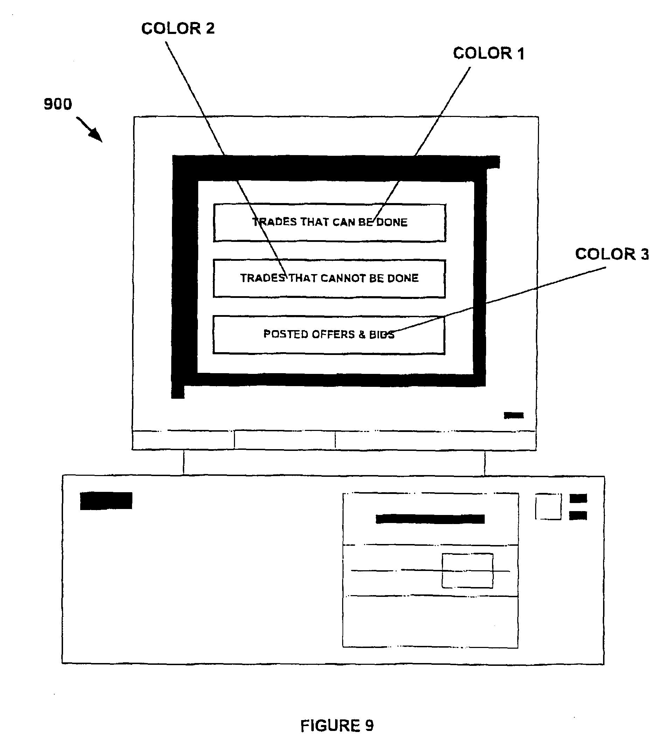

In a preferred embodiment, as illustrated in Figure 9, the system 100 provides each online user of the system 100 with a user customizable display 900 that provides a graphical illustration of: (1) transactions that can be completed by the user; (2) transactions that cannot be completed by the user; and (3) offers and bids that have been posted by the user. In this manner, each user is provided with a graphical display that quickly and efficiently indicates the condition of the market for the user. In a preferred embodiment, the system 100 indicates transactions that can be completed by the user using a first colour, the system 100 indicates transactions that cannot be completed by the user using a second colour, and the system 100 indicates offers and bids that have been posted by the user using a third colour. The use of a graphical indicia for each of the users provides a tremendous improvement in trading efficiency.

In an exemplary embodiment, transactions that can be completed by the user includes transactions for which the user has DBA authorization and transactions for which the counter parties are acceptable. In an exemplary embodiment, transactions that cannot be completed by the user includes transactions for which the user does not have DBA authorization or for which the counter parties are acceptable. In this manner, a user can have DBA authorization for some transactions; but not for all. Furthermore, a user can have principal status for some transactions and DBA authorization status for others. In addition, a user can have DBA authorization from a plurality of other users. In this manner, a user can trade in a variety of capacities using the system 100.

In a preferred embodiment, the operation of the system 100 includes the use of an expert system to facilitate the consummation of transactions between users. In a preferred embodiment, the expert system automatically generates a default tolerance for one or more of the parameters of a transaction. The expert system further presents the transactions that fall within the pre-selected default tolerance criteria to the user and requests the user to further define, accept, or reject the tolerance. In this manner, the users of the system 100 are provided with optimum flexibility. In a preferred embodiment, the users of the system 100 are requested to enter initial tolerance information for one or more of the parameters of a transaction. In this manner, the users can select the initial default tolerance values and then adjust these tolerance values as desired in order to achieve an acceptable transaction.

A trading and brokerage system has been described that includes a host computer system, one or more primary counterparties coupled to the host computer system that are identified as traders, and one or more agents coupled to the host computer system that are identified as brokers doing business for one or more traders. In a preferred embodiment, one or more of the agents are identified as brokers doing business for a plurality of principal traders. In a preferred embodiment, agents identified as brokers doing business for a plurality of principal traders can controllably select which principal traders to trade for in the trading system. In a preferred embodiment, the host computer is adapted to permit one of the users of the system to be identified as a potential buyer and another one of the users to be identified as a potential seller; and wherein the host computer is adapted to permit the potential buyer and the potential seller to privately negotiate a trade. In a preferred embodiment, the host computer system is adapted to provide each user with a visual indication of: (1) which transactions can be completed by the user; (2) which transactions cannot be completed by the user; and (3) which offers and bids have been posted by the user.

A computer implemented method of trading and brokerage products for primary counterparties and agents of a computer system has also been described that includes identifying one or more of the primary counterparties as traders, identifying one or more of the agents as brokers doing business as traders, and permitting the traders and brokers to purchase and sell products using the computer system. In a preferred embodiment, the method further includes identifying one or more of the brokers doing business on behalf of one or more principal traders. In a preferred embodiment, the method further includes identifying one or more of the brokers doing business on behalf of a plurality of principal traders. In a preferred embodiment, the method further includes permitting agents identified as brokers doing business for a plurality of traders to controllably select which principal traders to trade for in the trading and brokerage system. In a preferred embodiment, the method further includes permitting one of the users of the system to be identified as a potential buyer and another one of the users to be identified as a potential seller, and permitting the potential buyer and the potential seller to privately negotiate a trade. In a preferred embodiment, the method further includes providing each user with a visual indication of: (1) which transactions can be completed by the user; (2) which transactions cannot be completed by the user; and (3) which offers and bids have been posted by the user.

A computer program for a computerized trading and brokerage system in which traders and brokers purchase and sell products, recorded in a medium in a machine readable format has also been described that includes identifying one or more of the primary counterparties as traders, identifying one or more of the agents as brokers doing business as traders, and permitting the agents and brokers to purchase and sell products using the trading and brokerage system. In a preferred embodiment, the computer program further includes identifying one or more of the agents as brokers doing business for one or more traders. In a preferred embodiment, the computer program further includes identifying one or more of the brokers doing business for a plurality of principal traders. In a preferred embodiment, the computer program further includes permitting agents identified as brokers doing business for a plurality of principal traders to controllably select which principal traders to trade for in the trading and brokerage system. In a preferred embodiment, the computer program further includes permitting one of the users of the system to be identified as a potential buyer and another one of the users to be identified as a potential seller, and permitting the potential buyer and the potential seller to privately negotiate a trade. In a preferred embodiment, the computer program further includes providing each user with a visual indication of: (1) which transactions can be completed by the user; (2) which transactions cannot be completed by the user; and (3) which offers and bids have been posted by the user.

A computer implemented method of providing a private negotiation between at least one potential buyer and at least one potential seller in a computerized trading and brokerage system has also been described that includes informing the other users of the system that a deal is in private negotiation, and
permitting the potential buyer and the potential seller to privately negotiate the deal.

A computer program for providing a private negotiation between at least one potential buyer and at least one potential seller in a computerized trading and brokerage system recorded in a medium in a machine readable format has also been described that includes informing the other users of the system that a deal is in private negotiation, and permitting the potential buyer and the potential seller to privately negotiate the deal.

A computer implemented method of placing limits on counterparties in a computerized trading and brokerage system has also been described that includes permitting each of the users of the system to place limits on the counter parties to a trade. In a preferred embodiment, the limitations include credit limits. In a preferred embodiment, the limitations includes identity limits.

A computer program for placing limits on counterparties in a computerized trading and brokerage system recorded in a medium in a machine readable format has also been described that includes permitting each of the users of the system to place limits on the counter parties to a trade. In a preferred embodiment, the limitations include credit limits. In a preferred embodiment, the limitations includes identity limits.

A computer implemented method of providing a trader in a computerized trading and brokerage system a visual indication of the market for the trader has also been described that includes providing a visual indication of the transactions that can be executed by the trader, providing a visual indication of the transactions that cannot be executed by the trader, and providing a visual indication of the offers and bids posted by the trader.

A computer program for providing a trader in a computerized trading and brokerage system a visual indication of the market for the trader recorded in a medium in a machine readable format has also been described that includes providing a visual indication of the transactions that can be executed by the trader, providing a visual indication of the transactions that cannot be executed by the trader, and providing a visual indication of the offers and bids posted by the trader.

A computer implemented method of trading and brokerage by a broker in a computerized trading and brokerage system has also been described that includes permitting the broker to trade on behalf of one or more principal traders. In a preferred embodiment, the method further includes permitting the broker to trade on behalf of a plurality of principal traders. In a preferred embodiment, the method further includes permitting the broker to trade as a principal trader.

A computer program for trading by a broker in a computerized trading and brokerage system recorded in a medium in a machine readable format has also been described that includes permitting the broker to trade on behalf of one or more principal traders. In a preferred embodiment, the computer program further includes permitting the broker to trade on behalf of a plurality of principal traders. In a preferred embodiment, the computer program further includes permitting the broker to trade as a principal trader.

As will be recognized by persons of ordinary skill in the art having the benefit of the present disclosure, multiple variations and modifications can be made in the embodiments of the invention. Although certain illustrative embodiments of the invention have been shown and described, a wide range of modifications, changes, and substitutions is contemplated in the foregoing disclosure. In some instances, some features of the present invention may be employed without a corresponding use of the other features.

## Claims

1. A trading and brokerage system, comprising:
a host computer system;
one or more primary counterparties coupled to the host computer system that are identified as principal traders; and
one or more agents coupled to the host computer system that are identified as brokers doing business for one or more principal traders.

2. The trading and brokerage system of claim 1, wherein one or more of the agents are identified as brokers doing business for a plurality of principal traders

3. The trading and brokerage system of claim 2, wherein the agents identified as brokers doing business for a plurality of principal traders can controllably select which principal traders to trade for in the trading and brokerage system.

4. The trading and brokerage system of claim 1, wherein the host computer is adapted to permit one of the users of the system to be identified as a potential buyer and another one of the users to be identified as a potential seller; and wherein the host computer is adapted to permit the potential buyer and the potential seller to privately negotiate a trade.

5. The trading and brokerage system of claim 1, wherein the host computer system is adapted to provide each user with a visual indication of: (1) which transactions can be completed by the user; (2) which transactions cannot be completed by the user; and (3) which offers and bids have been posted by the user.

6. The trading and brokerage system of claim 1, wherein the actual identities of the users are not disclosed to other users of the system.

7. The trading and brokerage system of claim 1, wherein the actual identities of the users are not disclosed until a transaction has been consummated.

8. A computer implemented method of trading and brokering products for primary counterparty and agent users of a computer system, comprising:
identifying one or more of the primary counterparties as traders;
identifying one or more of the agents as brokers doing business as traders; and
permitting the agents and brokers to trade products using the computer system.

9. The method of claim 8, further including:
identifying one or more of the agents as brokers doing business for a plurality of principal traders.

10. The method of claim 9, further including:
permitting agents identified as brokers doing business for a plurality of principal traders to controllably select which principal traders to trade for in the trading and brokerage system.

11. The method of claim 8, further including:
permitting one of the users of the system to be identified as a potential buyer and another one of the users to be identified as a potential seller; and
permitting the potential buyer and the potential seller to privately negotiate a trade.

12. The method of claim 8, further including:
providing each user with a visual indication of: (1) which transactions can be completed by the user; (2) which transactions cannot be completed by the user; and (3) which offers and bids have been posted by the user.

13. The method of claim 8, further including:
maintaining the identity of the users of the system in anonymity.

14. The method of claim 8, further including:
maintaining the identity of the users of the system in anonymity until a transaction is consummated.

15. A computer program for a computerized trading and brokerage system in which primary counterparties and agents trade products, comprising:
a storage medium; and
instructions stored in the storage medium for:
identifying one or more of the primary counterparties as traders;
identifying one or more of the agents as brokers doing business on behalf of traders; and
permitting the agents and brokers users to trade products using the trading and brokerage system.

16. The computer program of claim 15, further including instructions for:
identifying one or more of the first users as brokers doing business on behalf of one or more principal traders.

17. The computer program of claim 15, further including instructions for:
identifying one or more of the agents as brokers doing business for a plurality of principal traders.

18. The computer program of claim 15, further including instructions for:
permitting second users identified as brokers doing business for a plurality of principal traders to controllably select which principal traders to trade for in the trading and brokerage system.

19. The computer program of claim 15, further including instructions for:
permitting one of the users of the system to be identified as a potential buyer and another one of the users to be identified as a potential seller; and
permitting the potential buyer and the potential seller to privately negotiate a trade.

20. The computer program of claim 15, further including instructions for:
providing each user with a visual indication of: (1) which transactions can be completed by the user; (2) which transactions cannot be completed by the user; and (3) which offers and bids have been posted by the user.

21. The computer program of claim 15, further including instructions for:
maintaining the identity of the users of the system in anonymity.

22. The computer program of claim 15, further including instructions for:
maintaining the identity of the users of the system in anonymity until a transaction is consummated.

23. A computer implemented method of providing a private negotiation between at least one potential buyer and at least one potential seller in a computerized trading and brokerage system, comprising:
informing the other users of the system that a deal is in private negotiation; and
permitting the potential buyer and the potential seller to privately negotiate the deal.

24. A computer program for providing a private negotiation between at least one potential buyer and at least one potential seller in a computerized trading and brokerage system, comprising:
a storage medium; and
instructions stored in the storage medium for:
informing the other users of the system that a deal is in private negotiation; and
permitting the potential buyer and the potential seller to privately negotiate the deal.

25. A computer implemented method of placing limits on counter parties in a computerized trading and brokerage system, comprising:
permitting each of the users of the system to place limits on the counter parties to a trade.

26. The method of claim 25, wherein the limitations include credit limits.

27. The method of claim 25, wherein the limitations includes identity limits.

28. A computer program for placing limits on counter parties in a computerized trading and brokerage system, comprising:
a storage medium; and
instructions stored in the storage medium for:
permitting each of the users of the system to place limits on the counter parties to a trade.

29. The computer program of claim 28, wherein the limitations include credit limits.

30. The computer program of claim 28, wherein the limitations includes identity limits.

31. A computer implemented method of providing a trader in a computerized trading and brokerage system a visual indication of the market for the trader, comprising:
providing a visual indication of the transactions that can be executed by the trader;
providing a visual indication of the transactions that cannot be executed by the trader; and
providing a visual indication of the offers and bids posted by the trader.

32. A computer program for providing a trader in a computerized trading and brokerage system a visual indication of the market for the trader, comprising:
a storage medium; and
instructions stored in the storage medium for:
providing a visual indication of the transactions that can be executed by the trader;
providing a visual indication of the transactions that cannot be executed by the trader; and
providing a visual indication of the offers and bids posted by the trader.

33. A computer implemented method of trading by a broker in a computerized trading and brokerage system, comprising:
permitting the broker to trade on behalf of one or more principal traders.

34. The method of claim 33, further including:
permitting the broker to trade on behalf of a plurality of principal traders.

35. A computer program for trading by a broker in a computerized trading and brokerage system, comprising:
a storage medium; and
instructions stored in the storage medium for:
permitting the broker to trade on behalf of one or more principal traders.

36. The computer program of claim 35, further including instructions for:
permitting the broker to trade on behalf of a plurality of principal traders.

37. A graphical user interface for providing a trader in a computerized trading and brokerage system a visual indication of the trading activity completed by and available to the trader, comprising:
a visual indication of the transactions that can be executed by the trader;
a visual indication of the transactions that cannot be executed by the trader; and
a visual indication of the offers and bids posted by the trader.
